# EUROPEAN PATENT SPECIFICATION

(11) **EP 1 298 836 B1**
(45) Date of publication and mention of the grant of the patent: **11.07.2007**
(21) Application number: 01402508.4
(22) Date of filing: 28.09.2001
(51) Int. Cl.: H04L 12/18, H04N 7/24

(54) **Method and device for IP multicast over a broadcast channel**
Verfahren und Vorrichtung zur IP-Mehrfachsendung über einen Rundfunkkanal
Procédé et dispositif de multidiffusion IP sur une chaîne d'émission

(43) Date of publication of application: 02.04.2003
(73) Proprietor: MOTOROLA, INC., Schaumburg, IL 60196 (US)
(72) Inventor: Garrec, David, 75015 Paris (FR); Lefevre, Fabienne, 75015 Paris (FR); Benali, Amor, 92160 Anthony (FR)
(74) Representative: Cross, Rupert Edward Blount

(56) References cited:
- WO-A-00/48361
- FENNER W: "Internet Group Management Protocol, Version 2" IETF REQUEST FOR COMMENTS, RFC2236, November 1997 (1997-11), XP002193942

## Description

### Field of the invention

This invention relates to the transmission of an Internet protocol ('IP') multicast service over a broadcast channel.

### Background of the invention

The most common type of IP communication is a unicast communication, that is to say in which the communication is established between nodes whose individual addresses are identified in the datagrams transmitted. If a server is to send the same datagrams to more than one address, it must repeat the datagrams with each individual address. The unicast method of transmission is accordingly ill suited to mass distribution of messages or other communications to many destinations.

To meet the requirement for transmitting Internet communications to many destinations, a modified protocol is available for multicast services. IP multicasting is the transmission of an IP datagram to a "host group", a set of one or more hosts identified by a single IP destination address. A multicast datagram is delivered to all members of its destination host group with the same "best-efforts" reliability as regular unicast IP datagrams, i.e., the datagram is not guaranteed to arrive intact at all members of the destination group or in the same order relative to other datagrams. The membership of a host group is dynamic; that is, hosts may join and leave groups at any time. An IP module may only receive datagrams if it has previously sent to the host a request to join the group. There is no restriction on the location or number of members in a host group. An incoming datagram destined to one of those groups is processed exactly the same way as datagrams destined to one of the host's individual addresses. Incoming datagrams destined to groups to which the host does not belong are identified by the group address and discarded without generating any error report or log entry.

Digital broadcasting, and in particular digital television, is another service enabling the transmission of programmes or other communications to many destinations over cable connections or satellite or terrestrial wireless electromagnetic transmissions. Broadcasting differs from IP transmission in that the communication is essentially unidirectional; if interaction is desired with the destination, the response of the destination must be through a different link, such as the Internet or telephony communications. Each transmission on a given channel reaches all receivers connected to that channel.

Data streams additional to the broadcast services may be transmitted over the same broadcast channels ('encapsulated'). Multicast services may therefore be transmitted in one direction with the broadcast service and this is a convenient method of providing IP multicast services. One such method is described in the Multimedia Car Platform (MCP) project described at the Internet site http://mcp.fantastic.ch/. Another method is described in International Patent Application specification publication N° WO 00/48361.

Also, patent document WO 00/48361 discloses a method to distribute IP multicast data in a digital broadcast network. In this document, the user stations of the digital broadcast network join multicast groups by replying to a multicast membership query according to the IGMP protocol. As soon as a single user station replies to an invitation to join a multicast group, the corresponding multicast service is provided on the digital broadcast network.

It is desirable to economise on the usage of transmission bandwidth ('spectrum') for multicast services transmitted together with digital broadcasts.

### Summary of the invention

The present invention provides a method of and broadcasting apparatus for providing an Internet Protocol multicast service over a broadcast channel as claimed in the accompanying claims.

### Brief description of the drawings

Figure 1 is a schematic diagram of a system for providing Internet protocol services over a broadcast channel,
Figure 2 is a schematic diagram of a system for providing multicast services over Internet infrastructure,
Figure 3 is a schematic diagram of a system for providing Internet protocol multicast services over a broadcast channel in accordance with one embodiment of the invention,
Figure 4 is a schematic diagram of a system for providing Internet protocol multicast services over a broadcast channel in accordance with another embodiment of the invention, and
Figure 5 is a flow chart of exchanges of messages in operation of the system of Figure 4.

### Detailed description of the preferred embodiments

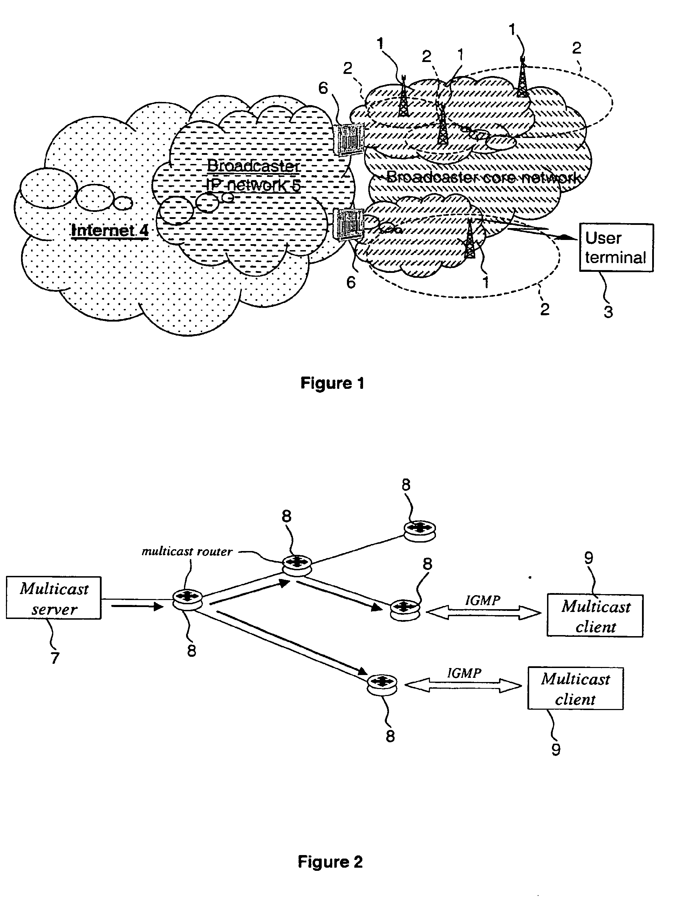

Figure 1 shows apparatus for transmitting Internet protocol datagrams over a digital video broadcast network. The broadcast network comprises transmitter apparatus, including aerials 1, each covering a respective broadcast cell 2 defined by its operating range. In this embodiment of the invention, the broadcast system is a digital television broadcasting system, in accordance with the European Telecommunications Standard Institute ("ETSI"), although other broadcast standards may be used in other embodiments of the invention. The particular system illustrated is a terrestrial broadcast system according to the standard DVB-T, but it will be appreciated that the invention is also applicable to broadcast from satellites or over cable systems, for example, as well. The system includes a source of television signals, including video and audio content and associated signal information and the transmission from an aerial 1 to receivers or user terminals 3 is unidirectional.

The system is also connected with Internet infrastructure 4 that can generate "private data" in the form of data carousels or IP datagrams for transmission over the broadcast network. The broadcasters' equipment includes a network 5 of Internet terminals connected with the Internet infrastructure 4. The broadcasters' network of terminals 5 and the network of broadcast transmitter equipment, including the aerials 1 are interconnected through gateways 6 that encapsulate the IP traffic into the stream of MPEG2 signals for the television in accordance with the DVB specification for data broadcasting ETSI EN 301 192 v1.2.1 and the implementation guidelines ETSI TR 101 202 192 V1.1.1.

Depending on the choices of the broadcaster, the IP/DVB gateways 6 can encapsulate the IP in the broadcasts for different sizes of areas, including one or more broadcasting cells. All the user terminals 3 within an area served will be able to receive the same IP packets coming from the same IP/DVB gateway 6. To reach a user through the broadcast link, an IP packet must be routed to the IP/DVB gateway 6 that serves the area in which the user is located.

Referring now to Figure 2, the Internet infrastructure 4 includes apparatus for providing IP multicast services using IP multicast protocols in accordance with the Internet protocol version 4, although it will be appreciated that other Internet protocol versions could be used in accordance with the invention. The IP multicast protocol enables IP datagrams to be transmitted from a source to many destinations using a single multicast address. To support multicast, the network entities need some minor adaptations.

The infrastructure for effecting multicasts over the normal Internet typically includes a multicast server 7, and multicast routers 8 that supply multicast communications to clients 9. In operation, the multicast server 7 begins by announcing the multicast session, the announcements being made using multicast protocols such as the session announcement protocol ("SAP") according to the current text of the Internet engineering task force ("IETF") standards, for example, through e-mail, newsgroups, web pages or directories. A host that wishes to be a client for such a session must subscribe to a local multicast router 8 using the Internet group management protocol ("IGMP"), of which version 3 is IETF version 6, the Internet group management protocol including two-way communication as shown in Figure 2. Each multicast router will broadcast the multicast session in all the sub-network that it serves if at least one user has subscribed.

In multicast communication over the normal Internet structure in accordance with the current text of the IETF standards, in order to avoid unnecessary exchanges of messages as users subscribe to a given multicast session, the message from a multicast client 9 subscribing to a session is sent to its multicast router 8 by IGMP protocol during a subscription period and is also broadcast to the other users in the sub-network served by that multicast router 8; the other users served by the same sub-network receive the subscription message of the first subscriber and are then inhibited from sending their own registration messages.

The multicast routers 8 accept all multicast messages to specific addresses (222.0.0.1 and 222.0.0.2) that are reserved for multicast communication. Once a message has been received for registration of a multicast client 9 and the time of the multicast session arrives, routing protocols and algorithms select all the sub-networks where the multicast datagrams are to be propagated and in which at least one multicast client 9 is known to have registered in order to receive the multicast packets.

It will be appreciated that the connections between the multicast routers 8 and the multicast clients 9 over the normal Internet infrastructure may include a point-to-point connection or a connection supporting only unicast services. Accordingly, it is still necessary to duplicate packets downstream of the multicast routers 8. Communication of the multicast data over a broadcast link, on the other hand, would avoid a requirement for any duplication of packets. Also, a broadcast link can offer a large and guaranteed bandwidth for the transmission of multicast services. In addition, the quality of service offered by a DVB broadcast is assured once the service has begun over the broadcast transmission system. Accordingly, it is desirable to be able to offer multicast services over broadcast networks, such as the DVB broadcast network illustrated in Figure 1.

In the normal Internet infrastructure, if there is even only a single user subscribed, a multicast service is always assured once the service has been announced but from a "best effort" philosophy: that is to say that packets are transported to the user as and when possible and the availability of sufficient bandwidth is not checked, so that the service received by the user may in fact be insufficient.

However, in the present embodiments of the invention, the available bandwidth of the DVB broadcast network for multicast services does not enable all possible sessions to be broadcast and it is necessary to be selective. In particular, the offer of multicast services over the broadcast transmitter network is conditional upon the availability of sufficient transmission resources for each multicast session and upon the number of users successfully registering for the multicast session, a return path being provided for registration of multicast clients 9, which is necessarily over a different link from the broadcast transmissions, given the unidirectional nature of the latter. More multicast sessions may be announced than are expected to be transmitted in fact ultimately at the proposed times, the selection of which sessions to broadcast being made as a function of the resources available in a given DVB area and the number of multicast clients 9 subscribing to the session in that area. The broadcaster may choose whether to cancel or postpone sessions that he decides not to broadcast as announced.

Another feature of the present embodiments of the invention is that the protocol enables more than one multicast client served by a given multicast router 8 to register for a given multicast session and, indeed, an incentive is provided for all users interested to register, in order to obtain as accurate a measure as possible of the demand for each particular multicast session proposed.

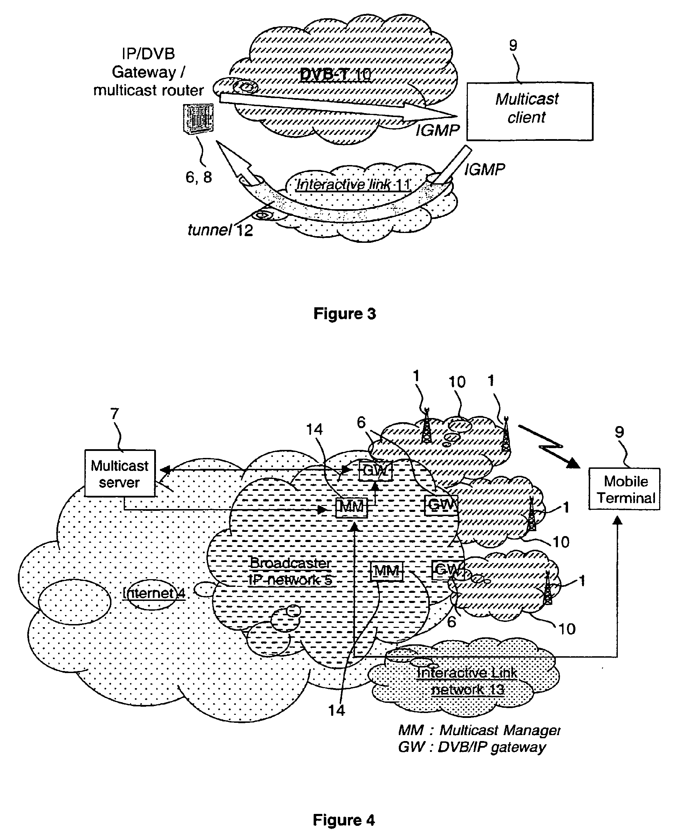

In the embodiment of the invention shown in Figure 3, the network 10 of DVB-T transmitters is supplied with IP and DVB data through the gateways 6, which also serve as multicast routers 8. Each of the multicast clients 9 has an interactive link 11, which is ensured by a telecommunications link according to the UMTS standards in the preferred embodiment of the invention, although return links to other wireless communication standards or through fixed line communications are also possible. The multicast services are transmitted over the DVB-T network 10 in response to registrations made by the multicast client 9 using the IGMP protocol.

In this embodiment of the invention, the communication of the multicast client 9 with the gateway and multicast router 6, 8 over the return link 11 in ensured as a "tunnel" 12 using the unidirectional link routing protocol ("UDLR") described in IETF RFC3077.

This standard is intended to enable the use of standard Internet protocols over unidirectional links, such as DVB, so that the unidirectional network behaves like a standard Internet bi-directional network. Multicast session announcements are broadcast over the unidirectional broadcast link. Responses from the multicast clients 9 are then returned to the IP/DVB gateway and multicast router 6, 8 through the interaction link 11. For this purpose, the IP address of the gateway is broadcast to all DVB receivers using the unidirectional broadcasts with the dynamic tunnel configuration protocol specified in UDLR.

In accordance with the current text of the UDLR standard, since the DVB receivers cannot communicate directly with other nodes in the same sub-network, the DVB gateway and multicast router 6, 8 would broadcast the registration messages it has received over the DVB broadcast. However, in accordance with this embodiment of the present invention, the IP/DVB gateway and multicast router 6, 8 blocks the registration messages that it receives and does not broadcast them over the DVB broadcasts. Each multicast client 9 therefore has an incentive to register for any multicast session that he is interested in, in order to increase the chances of the multicast session actually being broadcast as announced in the broadcast area he receives. It is therefore possible to count the number of responses received for each IP/DVB gateway and multicast router 6, 8 and this number can be used to judge the importance and value of broadcasting a particular multicast session in that area and to decide between different sessions if insufficient broadcast resources are available for broadcasting them all.

In addition to the responses of the multicast clients 9 before the broadcast of a given multicast session, the IGMP protocol also implements a "query" message whereby the user stations are repeatedly interrogated during the course of the session and respond automatically if the session is still being received. This query is also implemented in the present embodiment of the present invention by responses over the interactive link 11.

In both cases, it is necessary for requests for the multicast sessions or responses confirming continued connection with the multicast session to be received from a sufficient number of the user stations, the multicast clients 9, at a given IP/DVB gateway and multicast router 6, 8, for that gateway and multicast router to broadcast a multicast session or to continue broadcasting it.

If the multicast session broadcast is cancelled or postponed, the users are warned by sending the session announcement protocol cancellation messages that are specified in IETF RFC2974. If the user still wishes to receive the multicast service, he may then attempt to access the service through a different multicast server.

The embodiment of the present invention shown in Figure 4 includes a DVB-T network 10 including transmitters 1, linked with the Internet infrastructure 4 through a broadcaster IP network 5, with IP/DVB gateway 6 providing the interface between the broadcaster IP network 5 and the DVB-T network 10. The Internet infrastructure 4 includes multicast server 7 and multicast routers (not shown in Figure 4.

The broadcaster IP network 5 also includes multicast manager units 14 that are linked with the multicast server 7 and multicast routers and with the IP/DVB gateways 6.

An interactive uplink 13 is provided from the mobile terminals 9 to the multicast managers 14, preferably through wireless communication according to the GPRS, WLAN or UMTS standards.

Responses of the multicast clients 9 registering for a multicast session are addressed to the specific multicast service addresses of the multicast managers 14 together with information concerning the gateway 6 from which they receive session announcements using the session announcement protocol. A multicast manager 14 controls the transmission of a multicast session through a plurality of IP/DVB gateways 6 as a function of the number of multicast clients 9 registering for that session for transmission through the respective gateways and the transmission of the multicast session at each gateway 6 is conditional upon the reception of requests for the session at that gateway from a sufficient number of user stations served by that gateway.

In more detail, each multicast manager 14 receives from the multicast server 7, like any other user in the Internet, announcements of forthcoming multicast sessions using the session announcement protocol, which it stores in a cache in the form of a multicast session directory service. The multicast manager 14 inserts the session description as a session description protocol according to the current text of the IETF standard RFC2327 into the stream of data broadcast from each of the IP/DVB gateways 6 that it controls, which is received by the mobile terminals 9 served by that multicast manager. Conditionally upon the reception of a number of requests from multicast clients 9 served by the different IP/DVB gateways 6 being greater than a threshold number, the multicast manager causes the corresponding gateway to subscribe to the corresponding multicast session. The threshold number is a function of the resources available for broadcasting that session from the gateway 6 concerned and is set so as to exclude any other multicast session that has fewer subscribers and would cause the bandwidth utilisation to exceed the resources available for multicast sessions.

Once again, the user stations are preferably interrogated repeatedly during the course of multicast sessions so as to check that there are still sufficient multicast clients subscribed and the continued transmission of the multicast data is conditional upon the reception of responses from a sufficient number of multicast client stations.

The responses from the multicast clients 9 are transmitted over the interactive link 13, which is connected to the Internet infrastructure 4 for onward transmission of the responses to the multicast managers 14. These responses are not retransmitted to the other multicast clients 9. Accordingly, the multicast clients 9 have an incentive to register for a given multicast session and the number of registrations received is a reliable measure of the potential demand for a given session.

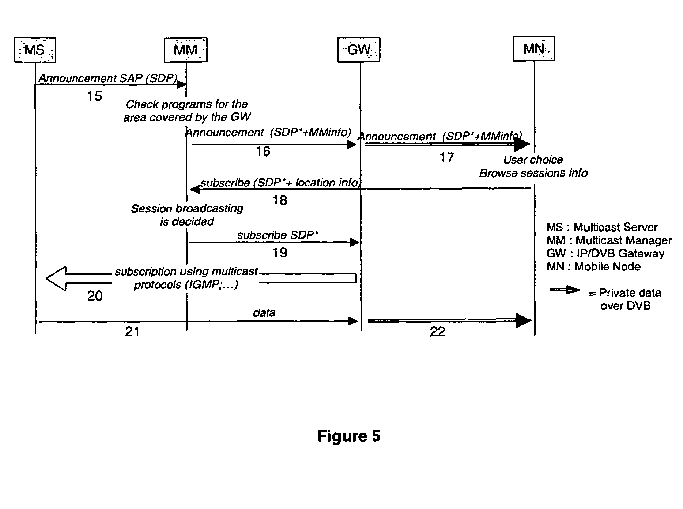

Figure 5 shows a flow chart of the exchanges of messages between the multicast server 7, the multicast managers 14, the gateways 6 and the mobile nodes, or multicast clients, 9. In this example, the preparation for broadcast of a multicast session starts with the session announcement using the session announcement protocol and including a description according to the session description protocol as shown at 15. The session announcements 15 are made at a multicast address that is generally known and with a port number that identifies the announcement protocol used (SAP in this example). The announcement 15 is broadcast during the period ("time to live") preceding the session to which it relates and is communicated to the IP/DVB gateways 6, which transmit the announcements without interpreting them.

The multicast session directory service tool of the multicast managers 14 enables the multicast managers to maintain a list of all session descriptions that have recently been announced and to send a list of available sessions for each gateway 6. Information as to the identity of each gateway 6 and its associated multicast manager address is included in the broadcast announcement so as to enable the user to respond to the multicast manager 14 corresponding to the gateway 6 that serves that multicast client 9 and this information is transmitted from the multicast manager 14 to the relevant gateway 6, as shown at 16. The multicast manager 14 checks whether the multicast sessions announced by the multicast server are intended for the area covered by the particular gateway 6 and only forwards those sessions that are. The selected session announcements 17, together with the multicast manager information, are then broadcast over the DVB transmitter network 10 to those multicast clients 9 within the area of the network 10 covered by the relevant gateway 6, in the manner of a data carousel. In the preferred embodiment of the invention the announcement 17 is made using the announcement support descriptor described in the DVB service information of ETFI EN300 468 V1.4.1, although it would also be possible to transmit the information in the DVB stream using other IP over DVB encapsulation mechanisms.

Each multicast manager 14 receives information concerning the bandwidth available for private data in the broadcast area fed by each of its DVB/IP gateways 6 that it controls. It controls the broadcast of a given multicast session at a given IP/DVB gateway 6 as a function of the number of responses it receives from multicast clients 9 served by that particular gateway as identified in the responses.

The user at each mobile terminal 9 can browse information received concerning the different multicast sessions available and subscribe to it by sending the identification of the session together with the identification of the location of the user, that is to say the identity of the gateway 6 that transmitted the announcement to him; the response is communicated to the address of the multicast manager indicated in the announcement as at 18. In an alternative embodiment, the location information of the mobile terminal is given by the identification of the DVB broadcast cell, which enables the multicast manager 14 to identify the gateway serving the user.

If the number of user subscriptions is greater than a threshold that excludes the superfluous multicast sessions for that particular area of the DVB transmission network 10, the multicast manager informs the corresponding DVB/IP gateway 6 to subscribe to the multicast session, as at 19. The IP/DVB gateway 6 then subscribes to the multicast session using the IGMP protocol as at 20. When the multicast session begins, multicast data is then communicated from the multicast server 7 to the IP/DVB gateway 6 as at 21, and passed to the transmitter network 10 where it is encapsulated as private data and transmitted over the transmitters 1 to the multicast clients 9, as shown at 22. The multicast clients 9 in the area of the transmitter network 10 served by that gateway 6 may then receive the multicast session at the corresponding multicast address.

While a multicast session is being broadcast, the DVB/IP gateways 6 continue sending further session announcements generated by the multicast manager 14 at regular intervals over the DVB transport stream and stop only when the session is finished or is cancelled by the broadcaster. If the broadcaster cancels the multicast session, the multicast manager 14 halts the corresponding announcement and generates a session cancellation announcement using the session announcement protocol.

In the preferred embodiment of the invention, the multicast clients 9 implement an implicit time-out for the session: if a session announcement message is not received during a predetermined period since the previous session announcement, the terminal considers that the multicast session has been cancelled without waiting for reception of the session cancellation announcement and can immediately attempt to receive the multicast service through an alternative multicast link.

## Claims

1. A method of providing an Internet Protocol multicast service wherein multicast data is transmitted through multicast routers (8) to user stations (9) over a digital broadcast channel together with digital broadcast signals, if a request (18) has been received from a user station (9) for the multicast data, **characterised in that**
a number of requests for said multicast data received from said user stations is checked, and
the transmission of said multicast data (22) by said multicast router is conditional upon said number of said requests (18) for said multicast data received from a plurality of said user stations by said multicast router.

2. A method as claimed in claim 1, wherein the transmission of said multicast data (22) by said multicast router is conditional upon the reception of said number of said requests (18) from said user stations (9) greater than a threshold number, said threshold number being a function of the available bandwidth for multicast transmission over said broadcast channel.

3. A method as claimed in claim 1 or 2, wherein said user stations (9) are repeatedly interrogated and the continued transmission of said multicast data (22) by said multicast router is conditional upon the reception of responses (18) from a plurality of said user stations (9).

4. A method as claimed in any preceding claim, wherein information concerning said requests (18) for said multicast data from said user stations (9) is unavailable to the others of said user stations (9).

5. A method as claimed in any preceding claim, wherein said signals and data are transmitted to respective broadcast areas through gateways (6) located between Internet and broadcast infrastructures (4, and 10) and the transmission of said multicast data (22) within a broadcast area by the corresponding gateway (6) is conditional upon the reception at that gateway of said request (18) for said multicast data from a plurality of said user stations (9) served by said broadcast area.

6. A method as claimed in any preceding claim, wherein announcements (17) of future multicast data transmission sessions are transmitted to said user stations (9) over said broadcast channel.

7. A method as claimed in claim 6, wherein said requests (18) for said multicast data from said user stations (9) are received by a multicast manager station (14) over a link different from said broadcast channel and said multicast manager station (14) controls the transmission of said sessions as a function of the number of said requests (18) from said user stations.

8. A method as claimed in claim 6 or 7, wherein an announcement of cancellation of a future multicast data transmission session or of termination of a current multicast data transmission session is transmitted to said user stations (9) over said broadcast channel.

9. A method as claimed in any of claim 6 to 8 wherein said user stations (9) respond to said announcements of future multicast data transmission sessions over a communication link different from said broadcast channel using a Unidirectional Link Routing protocol, said request (18) for said multicast : data from said user stations (9) being filtered to prevent its transmission to other user stations (9).

10. Apparatus for providing an Internet Protocol multicast service by a method as claimed in any preceding claim comprising transmitter means (1, 10) for transmitting said multicast data (22) to said user stations (9) over said digital broadcast channel together with said digital broadcast signals and multicast data supplying means selectively responsive to the reception of said request (18) for said multicast data from a plurality of said user stations (9) for supplying said multicast data (22) to said transmitter means (1, 10).

11. Apparatus as claimed in claim 10, wherein said multicast data supplying means comprises a multicast server (7) linked to said transmitter means (1, 10) through Internet infrastructure (4, 5), a gateway (6) between the Internet (4, 5) and broadcast (10) infrastructures and means for enabling transmission of said multicast data (22) selectively responsive to the number of requests (18) for said multicast data (22) received from said user stations in the broadcast area served by said gateway (6).

## Patentansprüche

1. Verfahren zur Bereitstellung eines Internetprotokoll-Multicast-Dienstes, wobei Multicast-Daten durch Multicast-Router (8) über einen digitalen Broadcast- bzw. Übertragungskanal zusammen mit digitalen Broadcast- bzw. Übertragungssignalen an Benutzerendgeräte (9) gesendet werden, wenn eine Anforderung (18) nach den Multicast-Daten von einem Benutzerendgerät (9) empfangen wird, **dadurch gekennzeichnet, dass** eine Anzahl von von den Benutzerendgeräten empfangenen Anforderungen nach den Multicast-Daten überprüft wird, und dass die Übertragung der Multicast-Daten (22) durch den Multicast-Router von der Anzahl der Anforderungen (18) nach den Multicast-Daten abhängt, die von einer Vielzahl der Benutzerendgeräte durch den Multicast-Router empfangen werden.

2. Verfahren nach Anspruch 1, **dadurch gekennzeichnet, dass** die Übertragung der Multicast-Daten (22) durch den Multicast-Router abhängig davon ist, dass die empfangene Anzahl der Anforderungen (18) von den Benutzerendgeräten (9) größer als eine Schwellenwertanzahl ist, wobei die Schwellenwertanzahl abhängig von der verfügbaren Bandbreite für die Multicast-Übertragung über den Broadcast- bzw. Übertragungskanal ist.

3. Verfahren nach einem der Ansprüche 1 oder 2, **dadurch gekennzeichnet, dass** die Benutzerendgeräte (9) wiederholt abgefragt werden, und dass die fortgesetzte Übertragung der Multicast-Daten (22) durch den Multicast-Router vom Empfang von Antworten (18) von einer Vielzahl der Benutzerstationen (9) abhängt.

4. Verfahren nach einem der vorhergehenden Ansprüche, **dadurch gekennzeichnet, dass** Informationen bezüglich der Anforderungen (18) nach den Multicast-Daten von den Benutzerendgeräten (9) für die andereren der Benutzerendgeräte (9) nicht verfügbar sind.

5. Verfahren nach einem der vorhergehenden Ansprüche, **dadurch gekennzeichnet, dass** die Signale und Daten an entsprechende Broadcast- bzw. Übertragungsbereiche durch zwischen Internet- und Broadcast- bzw. Übertragungsinfrastrukturen (4, 5 und 10) befindliche Gateways (6) übertragen werden, und dass die Übertragung der Multicast-Daten (22) innerhalb eines Broadcast- bzw. Übertragungsbereichs durch die entsprechende Gateway (6) vom Empfang, an der Gateway, einer Anforderung (18) nach den Multicast-Daten von einer Vielzahl der von dem Broadcast- bzw. Übertragungsbereich bedienten Benutzerendgeräte (9) abhängt.

6. Verfahren nach einem der vorhergehenden Ansprüche, **dadurch gekennzeichnet, dass** Ankündigungen (17) von zukünftigen Multicast-Datenübertragungssitzungen über den Broadcast- bzw. Übertragungskanal an die Benutzerendgeräte (9) übertragen werden.

7. Verfahren nach Anspruch 6, **dadurch gekennzeichnet, dass** die Anforderungen (18) nach den Multicast-Daten von den Benutzerendgeräten (9) von einem Multicast-Verwaltungsendgerät (14) über eine Verbindung empfangen werden, die sich von dem Broadcast- bzw. Übertragungskanal unterscheidet, und dass das Multicast-Verwaltungsendgerät (14) die Übertragung der Sitzungen in Abhängigkeit von der Anzahl der Anforderungen (18) von den Benutzerendgeräten steuert.

8. Verfahren nach Anspruch 6 oder 7, **dadurch gekennzeichnet, dass** eine Ankündigung eines Wegfalls einer zukünftigen Multicast-Datenübertragungssitzung oder des Abbruchs einer gegenwärtigen Multicast-Datenübertragungssitzung über den Broadcast- bzw. Übertragungskanal an die Benutzerendgeräte (9) übertragen werden.

9. Verfahren nach einem der Ansprüche 6 bis 8, **dadurch gekennzeichnet, dass** die Benutzerendgeräte (9) auf die Ankündigungen von zukünftigen Multicast-Datenübertragungssitzungen über eine Kommunikationsverbindung, die sich von dem Broadcast- bzw. Übertragungskanal unterscheidet und ein "Unidirectional Link Routing"-Protokoll verwendet, reagieren, wobei die Anforderung (18) nach den Multicast-Daten von den Benutzerendgeräten (9) gefiltert wird, um ihre Übertragung an andere Benutzerendgeräte (9) zu verhindern.

10. Vorrichtung zur Bereitstellung eines Internetprotokoll-Multicastdienstes durch ein Verfahren nach einem der vorhergehenden Ansprüche, welche Übertragungsmittel (1, 10) zur Übertragung der Multicast-Daten (22) an die Benutzerendgeräte (9) über den digitalen Broadcast- bzw. Übertragungskanal zusammen mit den digitalen Broadcast- bzw. Übertragungssignalen, und Multicast-Daten bereitstellende Mittel aufweist, die selektiv ansprechend auf den Empfang der Anforderung (18) nach den Multicast-Daten von einer Vielzahl der Benutzerendgeräte (9) zur Bereitstellung der Multicast-Daten (22) an die Übertragungsmittel (1, 10) sind.

11. Vorrichtung nach Anspruch 10, **dadurch gekennzeichnet, dass** die die Multicast-Daten bereitstellenden Mittel einen Mulicast-Server (7), der über die Internetinfrastruktur (4, 5) mit den Übertragungsmitteln (1, 10) verbunden ist, wobei eine Gateway (6) zwischen den Internet- (4, 5) und Broadcast- bzw. Übertragungsinfrastrukturen sowie Mittel zur Freigabe von Übertragungen der Multicast-Daten (22) aufweisen, die selektiv ansprechend auf die Anzahl von Anforderungen (18) nach den Multicast-Daten (22) sind, die von den Benutzerendgeräten in dem durch die Gateway (6) bediente Broadcast- bzw. Übertragungsbereich empfangen werden.

## Revendications

1. Procédé destiné à fournir un service de multidiffusion de protocole Internet dans lequel des données de multidiffusion sont transmises via des routeurs de multidiffusion (8) à des stations d'utilisateur (9) sur un canal de diffusion numérique avec des signaux de diffusion numérique lorsqu'une demande (18) a été reçue d'une station d'utilisateur (9) concernant les données de multidiffusion, **caractérisé en ce que**
un nombre de demandes connexes auxdites données de multidiffusion reçu par lesdites stations d'utilisateur est vérifié, et
la transmission desdites données de multidiffusion (22) par ledit routeur de multidiffusion est conditionnée par ledit nombre desdites demandes (18) concernant lesdites données de multidiffusion reçu d'une pluralité desdites stations d'utilisateur via ledit routeur de multidiffusion.

2. Procédé selon la revendication 1, dans lequel la transmission desdites données de multidiffusion (22) via ledit routeur de multidiffusion est conditionnée par la réception dudit nombre desdites demandes (18) par lesdites stations d'utilisateur (9) supérieur à un nombre seuil, ledit nombre seuil étant en fonction de la bande passante disponible en vue de la transmission de multidiffusion sur ledit canal de diffusion.

3. Procédé selon la revendication 1 ou 2, dans lequel lesdites stations d'utilisateur (9) sont, de manière répétée, interrogées et la transmission en continue desdites données de multidiffusion (22) par ledit routeur de multidiffusion est conditionnée par la réception des réponses (18) d'une pluralité desdites stations d'utilisateur (9).

4. Procédé selon l'une quelconque des revendications précédentes, dans lequel les informations connexes auxdites demandes (18) pour lesdites données de multidiffusion desdites stations d'utilisateur (9) ne sont pas disponibles aux autres stations d'utilisateur (9).

5. Procédé selon l'une quelconque des revendications précédentes, dans lequel lesdits signaux et données sont transmis à des zones de diffusion respectives via des passerelles (6) localisées entre des infrastructures Internet et de diffusion (4, 5 et 10) et la transmission desdites données de multidiffusion (22) dans une zone de diffusion par la passerelle correspondante (6) est conditionnée par la réception au niveau de cette passerelle de ladite demande (18) concernant lesdites données de multidiffusion d'une pluralité desdites stations d'utilisateur (9) desservie par ladite zone de diffusion.

6. Procédé selon l'une quelconque des revendications précédentes, dans lequel des annonces (17) de futures sessions de transmission de données de multidiffusion sont transmises auxdites stations d'utilisateur (9) sur ledit canal de diffusion.

7. Procédé selon la revendication 6, dans lequel lesdites demandes (18) concernant lesdites données de multidiffusion desdites stations d'utilisateur (9) sont reçues par une station de gestionnaire de multidiffusion (14) sur une liaison différente dudit canal de diffusion et ladite station de gestionnaire de multidiffusion (14) commande la transmission desdites sessions en fonction du nombre desdites demandes (18) desdites stations d'utilisateur.

8. Procédé selon la revendication 6 ou 7, dans lequel une annonce d'annulation d'une future session de transmission de données de multidiffusion ou d'arrêt d'une session de transmission de données de multidiffusion en cours est transmise auxdites stations d'utilisateur (9) sur ledit canal de diffusion.

9. Procédé selon l'une quelconque des revendications 6 à 8 dans lequel lesdites stations d'utilisateur (9) répondent auxdites annonces de futures sessions de transmission de données de multidiffusion sur une liaison de communication différente dudit canal de multidiffusion en utilisant un protocole de routage de liens unidirectionnels (Unidirectionnal Link Routing, en anglais), ladite demande (18) concernant lesdites données de multidiffusion desdites stations d'utilisateur (9) étant filtrée en vue d'empêcher sa transmission à d'autres stations d'utilisateur (9).

10. Dispositif destiné à fournir un service de multidiffusion de protocole Internet par un procédé selon l'une quelconque des revendications précédentes comportant des moyens d'émetteur (1, 10) en vue de transmettre lesdites données de multidiffusion (22) auxdites stations d'utilisateur (9) sur ledit canal de diffusion numérique ainsi que lesdits moyens de distribution de données de multidiffusion et moyens de signaux de diffusion numériques sensibles de façon sélective à la réception de ladite demande (18) concernant lesdites données de multidiffusion d'une pluralité desdites stations d'utilisateur (9) en vue de délivrer lesdites données de multidiffusion (22) auxdits moyens d'émetteur (1,10).

11. Dispositif selon la revendication 10, dans lequel lesdits moyens de distribution de données de multidiffusion comportent un serveur de multidiffusion (7) associé auxdits moyens d'émetteur (1, 10) via une infrastructure Internet (4, 5), une passerelle (6) entre les infrastructures Internet (4, 5) et de diffusion (10) et des moyens en vue de permettre la transmission desdites données de multidiffusion (22), de façon sélective, sensible au nombre de demandes (18) concernant lesdites données de multidiffusion (22) reçu desdites stations d'utilisateur dans la zone de diffusion desservie par ladite passerelle (6).
